# EUROPEAN PATENT APPLICATION

(11) **EP 2 874 059 A1**
(43) Date of publication of application: **20.05.2015**
(21) Application number: 14187082.4
(22) Date of filing: 30.09.2014
(51) Int. Cl.: G06F 3/06

(54) **Personal cloud storage chain service system and method**

(30) Priority: 14.11.2013 KR 20130138157
(71) Applicant: Humax Co., Ltd., Yongin-si 449-934 (KR)
(72) Inventor: Park, Ki Yong, Seoul 143-773 (KR)
(74) Representative: Zardi, Marco

(57) **Abstract**

Disclosed herein are a personal cloud storage chain service system and method which are capable of solving the shortage problem of personal cloud storage by connecting surplus storages, used by each person, to a Digital Media Player (DMP) (e.g., a SetTopBox (STB)) and storing and managing content. A personal cloud storage chain service system according to an embodiment of the present disclosure includes one or more storages configured to include a surplus storage space and be detachable and a DMP configured to issue and store respective signatures for identifying the respective storages when the one or more storages are connected and to store and manage basic information about contents stored in the one or more storages.

## Description

### BACKGROUND OF THE INVENTION

### Field of the Invention

Exemplary embodiments of the present disclosure relate to a personal cloud storage chain service system and method, and more particularly, to a personal cloud storage chain service system and method which are capable of solving the shortage problem of personal cloud storage by connecting each of surplus storage, used by each person, to a Digital Media Player (DMP) (e.g., a SetTopBox (STB)) and storing and managing content.

### Description of the Related Art

Cloud computing is a computing style in which functions related to Information Technology (IT) are provided as a service. Users may use the service through the Internet even without specialized knowledge of supported technical infrastructure or although they are unaware of controlling supported technical infrastructure. That is, a user may be provided with desired computing resources anytime or anywhere through the Internet using cloud computing.

In general, computing resources are managed by a separate resource provider, such as a large data center, and may include hardware resources, such as the CPU ability, memory, and storage, development platforms, and application programs.

A personal cloud solution is advantageous in that it has a space for storing personalized content.

However, as storage continues to be developed and the capacity of personalized content is exponentially increased, a continued need for personal efforts for storage maintenance and repair is required, and data also continues to be required. That is, there is a problem in that expenses are increased whenever one storage is added because the capacity of storage for storing content is limited.

Furthermore, storage used in personal cloud is problematic in that a connection ring between contents is lost if the storage is full of data when connected and that it is very inconvenient to replace the storage.

### [Prior Art Document]

### [Patent Document]

Korean Patent Application Publication No. 10-2010-0137323 (December 30, 2010)

### SUMMARY OF THE INVENTION

An object of the present disclosure is to provide a personal cloud storage chain service system and method which are capable of solving the shortage problem of personal cloud storage by connecting each of surplus storage, used by each person, to a DMP (e.g., an STB) and storing and managing content.

In accordance with an aspect of the present disclosure, there is provided a personal cloud storage chain service system, including one or more storages, each being configured to include a surplus storage space and be detachable and a DMP configured to issue and store respective signatures for identifying the respective storages when the one or more storages are connected and to store and manage basic information about contents stored in the one or more storages.

Furthermore, the one or more storages are connected by a hot plug-in without a power cycle when the one or more storages are connected to the DMP.

Furthermore, the DMP outputs a message that requests a new storage, and records a new signature for the new storage and further records additional information on its own storage information when the new storage is plugged in, if all of the one or more storages are full of data due to continued cloud service.

Furthermore, the DMP displays the ID of a specific storage so that a user is able to be aware of the number of the specific storage when the specific storage is connected to or separated from the DMP.

Furthermore, the DMP outputs a message that requests that a different storage of a corresponding ID be connected, if a user makes an access request for content stored in the different storage during content navigation.

In accordance with another aspect of the present disclosure, there is provided a digital media player, including a communication unit configured to communicate with an external device, a connector unit configured to be connected to one or more storages, a storage unit configured to store information about the one or more storages, a signature issuance unit configured to issue a signature for a connected storage, an output unit configured to output information about the connected storage through sound or display the information about the storage on a screen, and a control unit configured to issue and store signatures for identifying the respective storages when the one or more storages are connected and to store and manage basic information about contents stored in the one or more storages.

Furthermore, the one or more storages may be connected to the connector unit by a hot plug-in without a power cycle.

Furthermore, the control unit is further configured to output a message that requests a new storage and to issue and record a new signature for the new storage and further record additional information on its own storage information when the new storage is plugged in, if all of the one or more storages are full of data due to continued cloud service.

Furthermore, the control unit is further configured to display the ID of a specific storage so that a user is able to be aware of the number of the specific storage when the specific storage is connected to or separated from the DMP.

The DMP further includes an input unit configured to receive data or commands from a user. The control unit outputs a message, requesting that a different storage of a corresponding ID be connected, through the output unit if a user makes an access request for content stored in the different storage through the input unit during content navigation.

In accordance with yet another aspect of the present disclosure, there is provided the personal cloud storage chain service method in a system including one or more storages and a DMP. The personal cloud storage chain service method includes steps of (a) connecting the one or more storages to the DMP, (b) issuing and storing, by the DMP, signatures for identifying the respective connected storages, and (c) storing and managing, by the DMP, information about a personal cloud storage chain formed when the one or more storages are connected and information about contents stored in the one or more storages.

Furthermore, the step (a) includes connecting the one or more storages to the DMP by a hot plug-in without a power cycle when the one or more storages are connected to the DMP.

Furthermore, in the step (c), if all of the one or more storages are full of data due to continued cloud service, the DMP may output a message that requests a new storage, and may record a new signature for the new storage and further record additional information on its own storage information when the new storage is plugged.

Furthermore, the step (a) includes displaying, by the DMP, the ID of a specific storage so that a user is able to be aware of the number of the specific storage when the specific storage is connected to or separated from the DMP.

Furthermore, in the step (c), if a user makes an access request for content stored in a different storage during content navigation, the DMP outputs a message that requests that the different storage of a corresponding ID be connected.

In accordance with further yet another aspect of the present disclosure, there is provided a personal cloud storage chain service method of a DMP, including a communication unit configured to communicate with an external device over a communication network, a connector unit, a signature issuance unit, an output unit, a storage unit, a control unit, and an input unit. The personal cloud storage chain service method includes (a) detecting, by the connector unit, connection of one or more storages, (b) issuing, by the signature issuance unit, a signature for a connected storage, (c) storing, by the control unit, information about a personal cloud storage chain formed when the one or more storages are connected, in the storage unit, and (d) storing and managing, by the control unit, data including media content in the connected storage.

Furthermore, in the step (a), the connector unit detects that the one or more storages are connected by a hot plug-in without a power cycle.

Furthermore, in the step (d), the control unit outputs a message that requests a new storage, and issues and records a new signature for the new storage and further records additional information on its own storage information when the new storage is plugged in, if all of the one or more storages are full of data due to continued cloud service.

Furthermore, in the step (a), the control unit displays the ID of a specific storage so that a user is able to be aware of the number of the specific storage when the specific storage is connected to or separated from the DMP.

Furthermore, in the step (d), the control unit outputs a message, requesting that a different storage of a corresponding ID be connected, through the output unit if a user makes an access request for content stored in the different storage through the input unit during content navigation.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a diagram schematically illustrating an overall configuration of a personal cloud storage chain service system in accordance with an embodiment of the present disclosure;
FIG. 2 is a diagram schematically illustrating functional blocks of a DMP in accordance with an embodiment of the present disclosure;
FIG. 3 is an overall flowchart illustrating a personal cloud storage chain service method in accordance with an embodiment of the present disclosure; and
FIG. 4 is a flowchart illustrating the personal cloud storage chain service method of the DMP in accordance with an embodiment of the present disclosure.

### DESCRIPTION OF SPECIFIC EMBODIMENTS

The present disclosure may be modified in various ways and may be implemented to have several embodiments. Specific embodiments of the present disclosure are illustrated in the drawings and are described in detail in the detailed description. It is however to be noted that the present disclosure is not intended to be limited to the specific embodiments, but is intended to include all modifications, equivalents, or substitutions which fall within the spirit and technical scope of the present disclosure. The same reference numbers are used throughout the drawings to refer to the same or like parts.

Hereinafter, a personal cloud storage chain service system and method according to some exemplary embodiments of the present disclosure are described in detail with reference to the accompanying drawings. Hereinafter, the same reference numerals will designate the same elements throughout the drawings, and redundant description of the same elements is omitted.

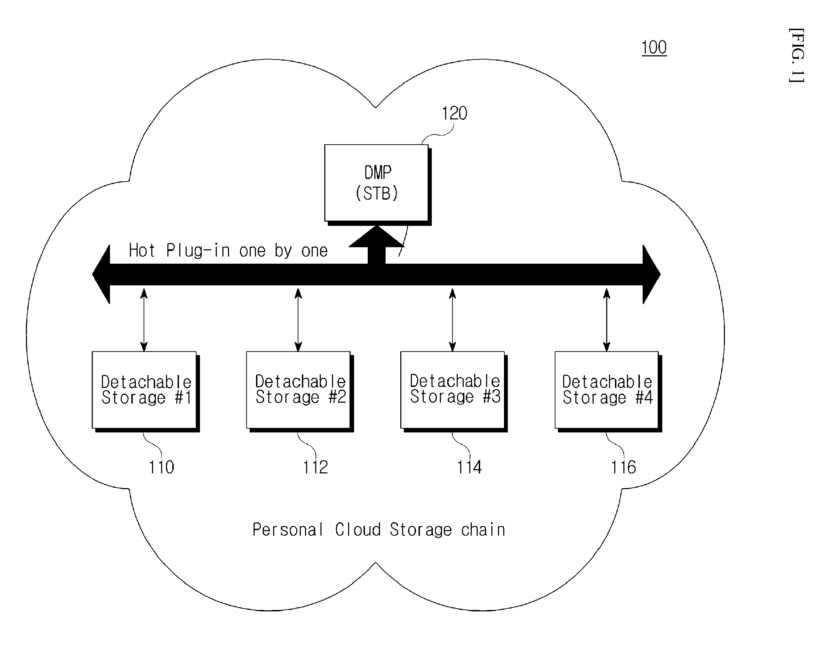

FIG. 1 is a diagram schematically illustrating an overall configuration of a personal cloud storage chain service system in accordance with an embodiment of the present disclosure.

Referring to FIG. 1, the personal cloud storage chain service system 100 in accordance with an embodiment of the present disclosure includes one or more storages 110∼116 and a DMP (e.g., an STB) 120.

The one or more storages 110∼116 include respective surplus storage spaces. A user may insert or separate the one or more storages 110∼116 into or from the DMP 120.

When the one or more storages 110 are connected to the DMP 120, the DMP 120 issues and stores a signature for identifying corresponding storage 110, and stores and manages information about personal cloud storage chains formed when the one or more storages 110∼116 are connected and information about contents stored in the one or more storages 110∼116. The DMP 120 may be, for example, an STB. That is, when the plurality of storages 110∼116 is connected to the DMP 120, a storage network having a specific capacity or higher capacity is formed in which the storage spaces of the respective storages 110∼116 form a chain form. In this case, this storage network configuration is called a 'personal cloud storage chain.'

When the one or more storages 110∼116 are connected to the DMP 120, they are connected to the DMP 120 by a hot plug-in without a power cycle.

If all of the one or more storages are full of data due to continued cloud service, the DMP 120 may output a message that requests new storage, and may record a new signature for the new storage and further record additional information on its own storage information when the new storage is plugged in.

Furthermore, when a storage is connected to or separated from the DMP 120, the DMP 120 displays the ID of the storage on a screen so that a user is able to be aware of the number of the storage.

Furthermore, if a user makes an access request for content stored in a different storage during content navigation, the DMP 120 may output a message that requests that the different storage of a corresponding ID be connected.

Personal cloud storage is an apparatus configured to access the Internet or a communication network anytime or anywhere and store and manage data or files. The personal cloud storage assigns a specific storage space to a user on a server. A user may download and use data or files stored in the personal cloud storage anytime or anywhere.

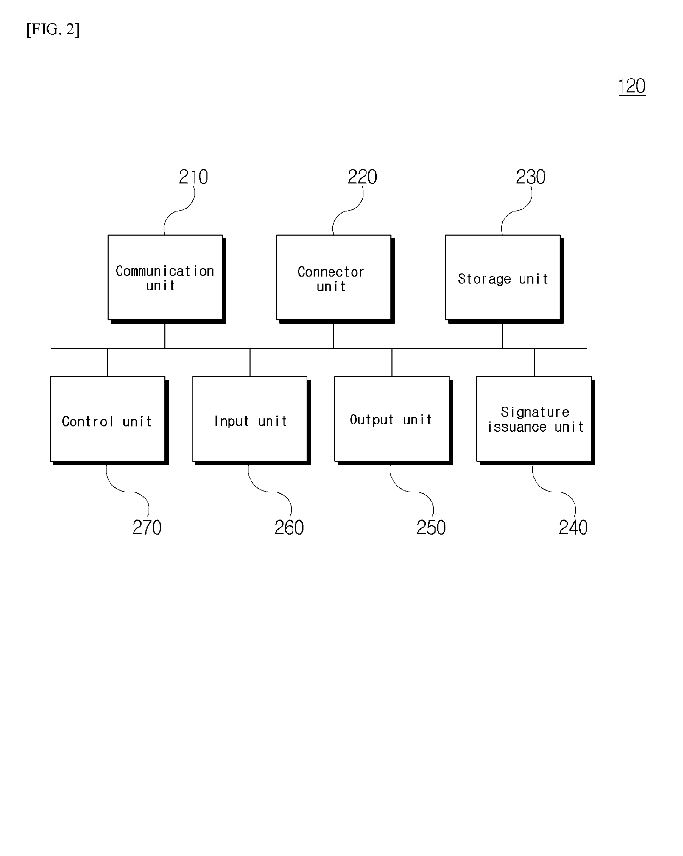

FIG. 2 is a diagram schematically illustrating functional blocks of the DMP 120 in accordance with an embodiment of the present disclosure.

Referring to FIG. 2, the DMP 120 in accordance with an embodiment of the present disclosure includes a communication unit 210, a connector unit 220, a storage unit 230, a signature issuance unit 240, an output unit 250, an input unit 260, and a control unit 270.

The communication unit 210 communicates with an external device over a communication network, such as the Internet or a mobile communication network.

The one or more storages 110∼116 are connected to the connector unit 220 by insertion. In this case, the one or more storages may be connected to the connector unit 220 by a hot plug-in without a power cycle.

The storage unit 230 stores information about storage.

The signature issuance unit 240 issues a signature for a connected storage.

The output unit 250 outputs information about storage through sound or displays the information on a screen.

The input unit 260 receives data or commands from a user.

When a storage is connected to the connector unit 220, the control unit 270 issues and stores a signature for identifying the connected storage, and stores and manages the issued signature together with information about contents stored in the one or more storages 110∼116. That is, the control unit 270 is responsible for a storage manager for managing the state in which the plurality of storages 110∼116 are connected through the connector unit 220, the state in which data is stored in or loaded onto to the plurality of storages 110∼116 connected to the connector unit 220, etc.

If all of the one or more storages 110∼116 are full of data due to continued cloud service, the control unit 270 outputs a message that requests a new storage, issues and records a new signature for the new storage when the new storage is plugged in, and records additional information on storage information.

Furthermore, when a storage is connected to or separated from the DMP 120, the control unit 270 displays the ID of the storage on a screen so that a user is aware of the number of the storage.

Furthermore, if a user makes an access request for content stored in a different storage through the input unit 260 during content navigation, the control unit 270 may output a message that requests that the different storage of a corresponding ID be connected through the output unit 250.

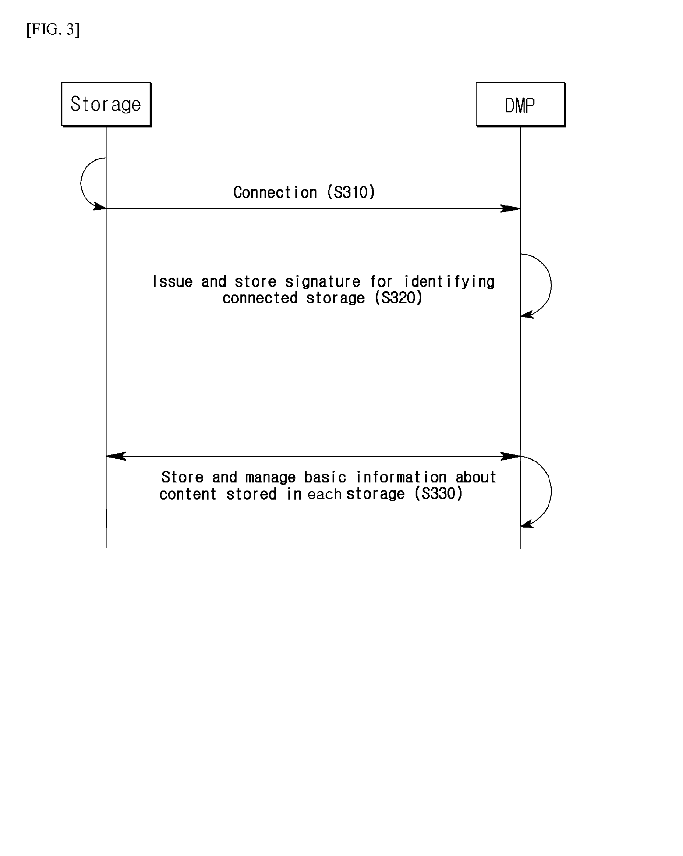

FIG. 3 is an overall flowchart illustrating a personal cloud storage chain service method in accordance with an embodiment of the present disclosure.

Referring to FIG. 3, in the personal cloud storage chain service system 100 in accordance with an embodiment of the present disclosure, the one or more storages 110∼116 are connected to the DMP 120 at step S310.

In this case, the one or more storages 110∼116 are connected to the DMP 120 by a hot plug-in without a power cycle.

Furthermore, when a storage is connected to or separated from the DMP 120, the DMP 120 displays the ID of the storage on a screen so that a user is able to be aware of the number of the storage.

Thereafter, the DMP 120 issues and stores a signature for identifying the connected storage at step S320.

Thereafter, the DMP 120 stores and manages basic information about contents stored in the one or more storages 110∼116 at step S330.

Furthermore, if all of the one or more storages are full of data due to continued cloud service, the DMP 120 may output a message that requests a new storage, and may record a new signature for the new storage and further record additional information on its own storage information when the new storage is plugged in.

Furthermore, if a user makes an access request for content stored in a different storage during content navigation, the DMP 120 may output a message that requests that the different storage of a corresponding ID be connected.

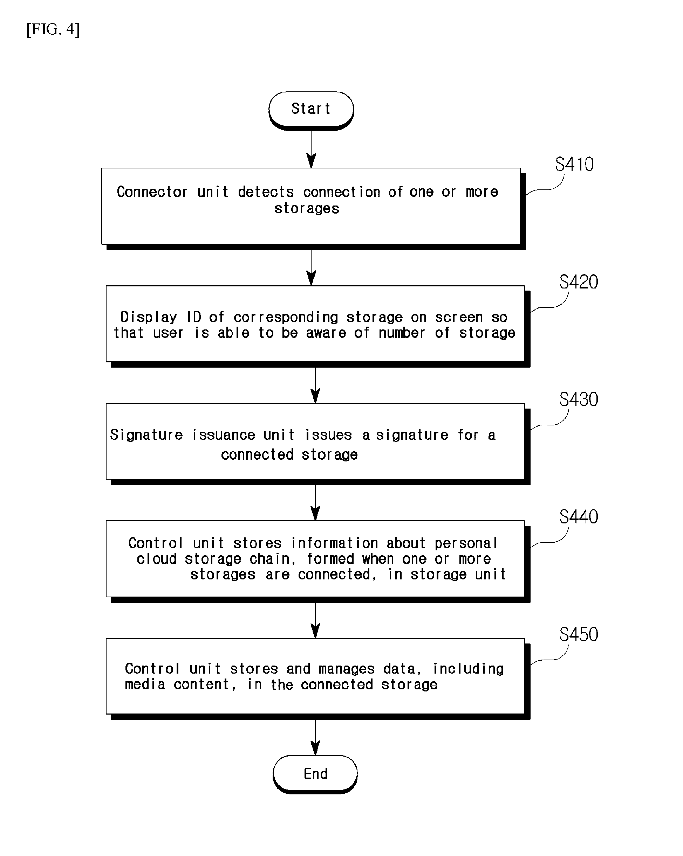

FIG. 4 is a flowchart illustrating the personal cloud storage chain service method of the DMP in accordance with an embodiment of the present disclosure.

Referring to FIG. 4, the connector unit 220 of the DMP 120 in accordance with an embodiment of the present disclosure detects the connection of the one or more storages 110∼116 at step S410.

In this case, the connector unit 220 detects that the one or more storages 110∼116 have been connected by a hot plug-in without a power cycle.

In this case, when a storage is connected to or separated from the DMP 120, the control unit 270 displays the ID of the corresponding storage on a screen so that a user is able to be aware of the number of the storage at step S420.

Also, the signature issuance unit 240 issues a signature for the connected storage 110∼116 at step S430.

Thereafter, the control unit 270 stores information about a personal cloud storage chain, formed when the one or more storages 110∼116 are connected, in the storage unit 230 at step S440.

Thereafter, the control unit 270 stores and manages data, including media content, in each of the connected storages 110∼116 at step S450.

In this case, the control unit 270 may record the upper limit date or lower limit date of content included in each storage.

If all of the one or more storages 110∼116 are full of data due to continued cloud service, the control unit 270 may output a message that requests new storage, may issue and record a new signature for the new storage when the new storage is plugged in, and may further record additional information on storage information.

Furthermore, if a user makes an access request for content stored in a different storage through the input unit 260 during content navigation, the control unit 270 may output a message, requesting that the different storage of a corresponding ID be connected, through the output unit 250.

That is, when a cloud file access request for one of the plurality of storages 110∼116 connected to the connector unit 220 is received, the control unit 270 determines at least one cloud storage that belongs to the plurality of storages 110∼116 and that is suitable for the cloud file access request, and performs control so that the requested file is provided by the determined storage.

In this case, the control unit 270 functions as a storage manager, and stores metadata, including information about file owners (e.g., service subscription information), information about client devices, information about security keys, file IDs, file names, file attributes (e.g., file sizes or types), the location of cloud storage in which files are stored, information about each cloud storage (e.g., current state information or QoS information), rights setting information for sharing with user groups or ordinary persons, the amount of information used, etc.

As described above, in accordance with the embodiments of the present disclosure, the personal cloud storage chain service system and method capable of solving the shortage problem of personal cloud storage by connecting surplus storages used by individuals to the DMP (e.g., an STB) and storing and managing contents can be realized.

In accordance with the embodiments of the present disclosure, the shortage problem of personal cloud storage can be solved and a storage cost can also be minimized by effectively managing personal surplus storage.

The present disclosure may be applied to a personal cloud storage chain service system and method capable of solving the shortage problem of personal cloud storage by connecting surplus storages used by individuals to a DMP (e.g., an STB) and storing and managing contents.

While the present disclosure has been described with respect to the specific embodiments, it will be apparent to those skilled in the art that various changes and modifications may be made without departing from the spirit and scope of the invention as defined in the following claims.

## Claims

1. A digital media player (120), comprising:
a communication unit (210) configured to communicate with an external device;
a connector unit (220) configured to be connected to one or more storages (110, 112, 114, 116);
a storage unit (230) configured to store information about the one or more storages;
a signature issuance unit (240) configured to issue a signature for a connected storage;
an output unit (250) configured to output information about the connected storage through sound or display the information about the storage on a screen; and
a control unit (270) configured to issue and store signatures for identifying the respective storages when the one or more storages are connected and to store and manage basic information about contents stored in the one or more storages.

2. The digital media player of claim 1, wherein the one or more storages are connected to the connector unit (220) by a hot plug-in without a power cycle.

3. The digital media player of claim 1, wherein the control unit (270) is further configured to output a message that requests a new storage and to issue and record a new signature for the new storage and further record additional information on its own storage information when the new storage is plugged in, if all of the one or more storages are full of data due to continued cloud service.

4. The digital media player of claim 1, wherein the control unit (270) is further configured to display an ID of a specific storage so that a user is able to be aware of a number of the specific storage when the specific storage is connected to or separated from the DMP.

5. The digital media player of claim 1, further comprising an input unit (260) configured to receive data or commands from a user,
wherein the control unit (270) outputs a message, requesting that a different storage of a corresponding ID be connected, through the output unit (250) if a user makes an access request for content stored in the different storage through the input unit (260) during content navigation.

6. A personal cloud storage chain service method of a Digital Media Player (DMP), comprising a communication unit configured to communicate with an external device over a communication network, a connector unit, a signature issuance unit, an output unit, a storage unit, a control unit, and an input unit, the personal cloud storage chain service method comprising:
(a) detecting, by the connector unit, connection of one or more storages (S410);
(b) issuing, by the signature issuance unit, a signature for a connected storage (S430);
(c) storing, by the control unit, information about a personal cloud storage chain formed when the one or more storages are connected, in the storage unit (S440); and
(d) storing and managing, by the control unit, data comprising media content in the connected storage (S450).

7. The personal cloud storage chain service method of claim 6, wherein in the step (a), the connector unit detects that the one or more storages are connected by a hot plug-in without a power cycle.

8. The personal cloud storage chain service method of claim 6, wherein in the step (d), the control unit outputs a message that requests a new storage, and issues and records a new signature for the new storage and further records additional information on its own storage information when the new storage is plugged in, if all of the one or more storages are full of data due to continued cloud service.

9. The personal cloud storage chain service method of claim 6, wherein in the step (a), the control unit displays an ID of a specific storage so that a user is able to be aware of a number of the specific storage when the specific storage is connected to or separated from the DMP.

10. The personal cloud storage chain service method of claim 6, wherein in the step (d), the control unit outputs a message, requesting that a different storage of a corresponding ID be connected, through the output unit if a user makes an access request for content stored in the different storage through the input unit during content navigation.

11. A computer program having program codes for performing the method of any one of claims 6 to 10 when being executed on a computer.

12. A personal cloud storage chain service system, comprising:
one or more storages (110, 112, 114, 116), each being configured to comprise a surplus storage space and be detachable; and
a Digital Media Player (DMP) (120) configured to issue and store signatures for identifying the respective storages when the one or more storages are connected and to store and manage basic information about contents stored in the one or more storages.

13. The personal cloud storage chain service system according to claim 12, wherein the DMP (120) outputs a message that requests a new storage, and records a new signature for the new storage and further records additional information on its own storage information when the new storage is plugged in, if all of the one or more storages are full of data due to continued cloud service.

14. The personal cloud storage chain service system according to claim 12, wherein the DMP (120) displays an ID of a specific storage so that a user is able to be aware of a number of the specific storage when the specific storage is connected to or separated from the DMP.

15. The personal cloud storage chain service system according to claim 12, wherein the DMP (120) outputs a message that requests that a different storage of a corresponding ID be connected, if a user makes an access request for content stored in the different storage during content navigation.
